# FASCICULE DE BREVET EUROPEEN

(11) **EP 0 946 419 B1**
(45) Date de publication et mention de la délivrance du brevet: **19.09.2001**
(21) Numéro de dépôt: 97947081.2
(22) Date de dépôt: 18.11.1997
(51) Int. Cl.: C01F 17/00, C01G 15/00, C04B 35/44, C04B 35/01, G01N 27/407, H01M 8/12, B01J 4/04, B01D 71/02, C01B 13/02

(54) **COMPOSE DU TYPE LaMO 3, M ETANT L'ALUMINIUM, LE GALLIUM OU L'INDIUM, SOUS FORME POUDRE OU SOUS FORME FRITTEE, SON PROCEDE DE PREPARATION ET SON UTILISATION EN TANT QUE CONDUCTEUR D'OXYGENE**
LaMO 3-TYP VERBINDUNG, WOBEI M ALUMINIUM, GALLIUM ODER INDIUM IST, IN PULVER- ODER SINTERFORM ZU DESSEN HERSTELLUNG UND DESSEN VERWENDUNG ALS SAUERSTOFFLEITER
LaMO 3 TYPE COMPOSITION, M BEING ALUMINIUM, GALLIUM OR INDIUM, IN POWDER OR SINTERED FORM, METHOD OF PREPARATION AND USE AS CONDUCTOR OF OXYGEN

(30) Priorité: 22.11.1996 FR 9614276
(43) Date de publication de la demande: 06.10.1999
(73) Titulaire: RHODIA CHIMIE, 92408 Courbevoie Cédex (FR)
(72) Inventeur: MACAUDIERE, Pierre, F-92600 Asnières-sur-Seine (FR); SEGUELONG, Thierry, F-92800 Puteaux (FR)
(74) Mandataire: Dubruc, Philippe
(86) Numéro de dépôt international: FR9702071
(87) Numéro de publication internationale: WO9822392

(56) Documents cités:
- LU-A- 44 083
- CHEMICAL ABSTRACTS, vol. 66, no. 6, 6 février 1967 Columbus, Ohio, US; abstract no. 25540b, page 2407; XP002039765 & A. M. GOLUB ET AL.: "Production of lanthanum aluminate by coprecipitation." IZV. AKAD. NAUK SSSR, NEORG. MATER., vol. 2, no. 9, 1966, pages 1608-1611,
- M. FENG ET AL.: "A superior oxide-ion electrolyte" EUROPEAN JOURNAL OF SOLID STATE INORGANIC CHEMISTRY, vol. 31, no. 8/9, 1994, MONTROUGE, FR, pages 663-672, XP002039764
- CHEMICAL ABSTRACTS, vol. 79, no. 10, 10 septembre 1973 Columbus, Ohio, US; abstract no. 55586g, page 140; XP002039766 & SU 266 751 A (L. P. SHKLOVER ET AL.) 8 février 1973
- P. PRAMANIK: "Chemical synthesis of nanosized oxides" BULLETIN OF MATERIALS SCIENCE, vol. 19, no. 6, décembre 1996, pages 957-961, XP002052751

## Description

La présente invention concerne un composé du type LaMO₃, M étant l'aluminium, le gallium ou l'indium, sous forme poudre ou sous forme frittée, son procédé de préparation et son utilisation en tant que conducteur d'oxygène

Le domaine des piles à combustible connaît actuellement un développement croissant. Cependant, les piles qui existent fonctionnent à des températures élevées, d'au moins 900°C. A ces températures, les phénomènes de réduction et de diffusions cationiques dans les différents éléments de la pile introduisent des réactions chimiques aux interfaces suivies d'une dégradation des performances électriques. On cherche donc des matériaux permettant d'abaisser les températures de fonctionnement de ces piles. En ce qui concerne la partie électrolyte solide, on connaît un composé du type (La,Sr)(Ga,Mg)O₃ qui présente pour des températures intermédiaires comprises entre 700 et 900°C une conductivité ionique intéressante et supérieure à celle de la zircone yttriée que l'on utilise habituellement. Cependant, on ne peut obtenir ce type de produit sous forme frittée à une densité convenable que par frittage sous pression (HIP). En outre, il n'a pas non plus été possible jusqu'à présent d'obtenir ce type de produit présentant en plus une pureté phasique supérieure à 80-90%. Ainsi, des phases parasites apparaissent aux joints de grains lors du frittage. Ces phase parasites bloquent la diffusions des ions O²⁻ dans le système électrolyte solide final ce qui entraîne une diminution des performances électriques.

Il existe donc un besoin en un produit qui puisse être obtenu sous forme frittée par le procédé plus simple de frittage sans pression.

Il existe aussi un besoin en un produit présentant une pureté phasique améliorée.

Un objet de la présente invention est de fournir des produits répondant à ces besoins.

Un autre objet de l'invention est de fournir des précurseurs de tels produits.

Dans ce but, le composé précurseur de l'invention est du type LaMO₃, M étant l'aluminium, le gallium ou l'indium, et il est caractérisé en ce qu'il se présente sous forme d'une poudre susceptible d'atteindre par frittage sans pression une densité au moins égale à 93% de la densité théorique et de donner à l'issue d'un frittage un produit substantiellement exempt de phase secondaire électriquement active aux joints de grains.

Par ailleurs, l'invention concerne un composé fritté du type LaMO₃, M étant l'aluminium, le gallium ou l'indium, qui est caractérisé en ce qu'il est substantiellement exempt de phase secondaire électriquement active aux joints de grains et en ce qu'il a été obtenu par frittage sans pression.

Dans les deux composés qui ont été décrits ci-dessus, le lanthane et le gallium peuvent être substitués partiellement.

L'invention concerne aussi un procédé de préparation d'un composé précurseur du type précité.

Selon une première variante, le procédé de préparation de l'invention est caractérisé en ce qu'on fait réagir des sels de lanthane et de l'élément M et, éventuellement, des sels des substituants de l'élément M et du lanthane, avec une base, ce par quoi on obtient un précipité, on sépare le précipité du milieu réactionnel et on calcine le précipité.

Selon une seconde variante, le procédé de préparation est caractérisé en ce qu'on forme un mélange en milieu liquide de sels de lanthane et de l'élément M et, éventuellement, de sels des substituants de l'élément M et du lanthane; on sèche par atomisation ledit mélange et on calcine le produit obtenu.

Selon une troisième variante, le procédé de préparation est caractérisé en ce qu'on forme un mélange en milieu liquide d'une base, d'une part et, d'autre part, de sels de lanthane et de l'élément M et, éventuellement, de sels des substituants de l'élément M et du lanthane; on atomise le mélange obtenu et on calcine le produit issu de l'atomisation.

Enfin, l'invention couvre aussi un dispositif incorporant un matériau sous forme oxyde, électrolyte solide, conducteur d'oxygène, du type sonde à oxygène, pile à combustible, réacteur chimique à membrane, membrane de séparation d'oxygène, caractérisé en ce qu'il comprend un composé fritté selon l'invention.

D'autres caractéristiques, détails et avantages de l'invention apparaîtront encore plus complètement à la lecture de la description qui va suivre, ainsi que des exemples concrets mais non limitatifs destinés à l'illustrer.

On va décrire tout d'abord le composé de l'invention appelé composé précurseur, c'est à dire le composé susceptible de donner par frittage le composé fritté.

Ce composé se présente sous forme d'une poudre.

Généralement, cette poudre présente une granulométrie d'au plus 10µm, plus particulièrement d'au plus 5µm et encore plus particulièrement d'au plus 2µm. La granulométrie donnée ici correspond à la taille moyenne des particules constituant la poudre et mesurée par la technique de diffraction laser en utilisant un granulomètre du type CILAS HR 850 (répartition en volume).

Le composé précurseur de l'invention est caractérisé par son comportement au frittage. En effet, il est susceptible d'atteindre par frittage sans pression une densité au moins égale à 93% de la densité théorique. Selon une variante préférée, il est susceptible d'atteindre, dans les mêmes conditions, une densité au moins égale à 95% de la densité théorique. La densité donnée ici est celle obtenue à l'issue d'un frittage sous air, à 1500°C, 6 heures.

On précise ici et pour l'ensemble de la description que la densité est déterminée par utilisation du principe de la poussée d'Archimède sur des pastilles frittées et immergées en milieu pétrole.

L'autre caractéristique spécifique du comportement au frittage du composé précurseur de l'invention est le fait que ce précurseur est aussi susceptible de donner, après frittage, et notamment après frittage sans pression, un produit fritté substantiellement exempt de phase secondaire électriquement active aux joints de grains.

Par phase électriquement active, on entend tout phase susceptible d'avoir une influence sur les propriétés électriques du composé considéré.

Cette absence de phase secondaire électriquement active aux joints de grains peut être mis en évidence par la mesure de la conductivité ionique du composé fritté.

L'absence de phase secondaire électriquement active aux joints de grains peut aussi être révélée par la méthode de spectroscopie d'impédance complexe mise en oeuvre sous air (telle que décrite par J.E. BAUERLE, J. Phys. Chem. Solids, 30 (1969) 2657). On obtient par cette méthode des diagrammes d'impédance complexe idéalisés (représentation de Nyquist) donnant la partie imaginaire de l'impédance en fonction de sa partie réelle. Les diagrammes obtenus pour les composés après frittage de l'invention mettent en évidence une absence de réponse due aux joints de grains (on n'observe pas de demi-cercle correspondant à un schéma électrique équivalent dont la capacité serait comprise entre 10⁻¹¹ et 10⁻⁸ Farad).

On précise enfin ici que par "substantiellement exempt" on entend qu'il n'est pas possible de mettre en évidence des phases secondaires électriquement actives compte tenu des limites de détection de telles phases par la méthode qui vient d'être donnée.

Comme indiqué plus haut, le composé précurseur répond à une formule du type LaMO₃, M pouvant être l'aluminium, le gallium ou l'indium ou encore une combinaison d'au moins deux de ces éléments.

Selon un mode de réalisation particulier, l'élément M est le gallium.

Selon un autre mode de réalisation particulier, le lanthane est partiellement substitué par un alcalin, un alcalino-terreux ou une terre rare. Par terre rare on entend les éléments du groupe constitué par l'yttrium et les éléments de la classification périodique de numéro atomique compris inclusivement entre 57 et 71. L'alcalin-peut être en particulier le sodium ou le potassium. L'alcalino-terreux peut être plus particulièrement le strontium. Le sodium et le potassium permettent d'obtenir à la suite du frittage des densités particulièrement élevées.

L'élément M, et notamment le gallium, peut aussi être partiellement substitué par un alcalino-terreux ou par le zinc. Comme alcalino-terreux substituant de l'élément M, on peut citer le magnésium.

Les proportions de substituants par rapport au lanthane et à l'élément M peuvent varier dans de larges proportions. Dans le cas du lanthane et d'un substituant du lanthane du type alcalin ou alcalino-terreux, le rapport atomique substituant/lanthane peut aller de préférence jusqu'à respectivement 10% ou 25%. Lorsque le substituant du lanthane est une terre rare, ce rapport peut aller jusqu'à 80%. Dans le cas de l'élément M, le rapport atomique substituant/ M peut aller jusqu'à 40% de préférence.

On notera enfin que dans le cadre de la présente invention, le lanthane et l'élément M peuvent chacun être substitués partiellement par un ou plusieurs substituants du type décrit ci-dessus.

Le composé de l'invention sous forme frittée va maintenant être décrit.

Ce composé est caractérisé en ce qu'il est substantiellement exempt de phase secondaire électriquement active aux joints de grains. Tout ce qui a été décrit plus haut sur l'absence de ces phases secondaires s'applique bien entendu ici pour la description du produit fritté.

Le composé fritté de l'invention peut aussi se caractériser par le fait qu'il a été obtenu par frittage sans pression. La densité du composé fritté est de préférence au moins égale à 93% de la densité théorique. Cette densité peut même être au moins égale à 95%. Des densités d'au moins 97% peuvent être atteintes.

Le composé fritté répond à une formule du type LaMO₃ mais ce qui a été décrit plus haut sur la substitution partielle des éléments lanthane et M s'applique aussi ici.

L'absence de phase secondaire électriquement active aux joints de grains confère aux composés frittés de l'invention une bonne conductivité ionique. Dans le cas des composés comprenant du strontium et du magnésium comme substituants partiels respectifs du lanthane et du gallium, cette conductivité est d'au moins 0,005S.cm⁻¹ à 600°C. Elle peut être plus particulièrement d'au moins 0,015S.cm⁻¹. Les conductivités mentionnées ici sont déterminées à partir des mesures d'impédance complexe en courant alternatif (AC). Les composés frittés de l'invention présentent aussi une conductivité d'au moins 0,04S.cm⁻¹ et de préférence d'au moins 0,06S.cm⁻¹ à 800°C. Pour cette température, les conductivités sont mesurées sous air par la méthode 4 points en courant continu (DC). Ces mesures de conductivité s'appliquent à l'ensemble de la description.

Le composé fritté peut présenter une phase de structure cubique, orthorhombique ou quadratique. Cette phase peut être pure. Dans le cas particulier du composé de formule La_{0,9}Sr_{0,1}Ga_{0,8}Mg_{0,2}O_{2,85} celui-ci peut se présenter sous forme d'une seule phase pure correspondant à un système perovskite quadratique.

Les procédés de préparation des composés de l'invention vont maintenant être décrits.

Une première variante du procédé de préparation d'un composé précurseur peut être considérée.

Ce procédé comprend une première étape dans laquelle on fait réagir des sels de lanthane et de l'élément M et, éventuellement, des sels des substituants de l'élément M et du lanthane, avec une base. Cette réaction se fait en milieu liquide. La réaction avec la base donne un précipité. Ce précipité est séparé du milieu réactionnel par tout moyen convenable. Le précipité est ensuite calciné.

Une seconde variante du procédé de l'invention existe aussi qui est particulièrement adaptée à la préparation d'un composé avec substituants. Ce procédé consiste d'abord à former un mélange en milieu liquide de sels de lanthane et de l'élément M et, éventuellement, de sels des substituants de ces éléments. Ensuite, dans une deuxième étape, on soumet ce mélange à une atomisation.

On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

Dans une dernière étape, on calcine le produit atomisé obtenu.

Une troisième variante du procédé peut être mentionnée qui est particulièrement adaptée aussi à la préparation d'un composé avec substituants. Selon cette variante, on forme tout d'abord un mélange en milieu liquide d'une base, d'une part et, d'autre part, de sels de lanthane et de l'élément M et, éventuellement, de sels des substituants de ces éléments. Lors de la formation de ce mélange, la base réagit avec les sels et on obtient un milieu comprenant un précipité résultant de cette réaction entre la base et les sels. La suite du procédé est identique à celle du procédé selon la variante précédente, on atomise en effet le mélange obtenu et on calcine le produit issu de l'atomisation.

Une dernière et quatrième variante va être décrite qui s'applique tout particulièrement à la préparation d'un composé dans lequel le lanthane est partiellement substitué par un alcalino-terreux choisi parmi le strontium, le calcium et le baryum.

Le procédé selon cette variante comporte une première partie dans laquelle on forme tout d'abord un composé comprenant l'ensemble des éléments constitutifs à l'exception du substituant du lanthane. Pour cela, dans une première-étape, on fait réagir avec une base des sels de lanthane et de l'élément M et, éventuellement, des sels des substituants de cet élément si ces substituants sont autres que le strontium, le calcium et le baryum.

Dans une seconde étape, on sépare le précipité obtenu par cette réaction du milieu réactionnel. On effectue ensuite une première calcination du précipité.

Dans une seconde partie du procédé, on forme un mélange en milieu liquide d'un sel de l'alcalino-terreux substituant du lanthane et du produit issu de la calcination précédente.

On atomise le mélange ou composé ainsi obtenu. On notera que ce qui a été décrit précédemment pour l'atomisation au sujet de la deuxième variante du procédé s'applique aussi ici pour cette étape d'atomisation de la présente variante.

On effectue enfin une dernière calcination du produit issu de l'atomisation.

Dans le cadre de cette même variante, la première partie du procédé peut encore être réalisée de manière différente. Ainsi, on forme un mélange en milieu liquide de sels de lanthane et de l'élément M et, éventuellement, des sels des substituants de l'élément M si ces substituants sont autres que le strontium, le calcium et le baryum. On atomise ensuite le mélange ainsi obtenu. Puis, on effectue ensuite une première calcination dans laquelle on calcine le produit issu de cette atomisation. Le produit calciné obtenu à l'issue de cette première partie est ensuite mis en mélange en milieu liquide avec le sel de l'alcalino-terreux substituant du lanthane et on met en oeuvre ensuite le procédé selon une seconde partie identique à celle qui vient d'être donnée.

Par ailleurs, on peut effectuer la première partie du procédé selon cette quatrième variante d'une manière proche de celle décrite pour la troisième variante. En effet, dans ce cas, on forme un mélange en milieu liquide de sels de lanthane et de l'élément M et d'une base, le milieu liquide pouvant encore comprendre éventuellement des sels des substituants de l'élément M si ces substituants sont autres que le strontium, le calcium et le baryum. Le mélange ainsi obtenu qui comprend le précipité résultant de la réaction entre la base et les sels est atomisé puis on effectue ensuite une première calcination dans laquelle on calcine le produit issu de cette atomisation. La seconde partie du procédé est ensuite identique à ce qui a été décrit plus haut pour cette quatrième variante.

Enfin, il est aussi possible dans le cadre de cette quatrième variante de procéder de la manière suivante. Dans une première partie on forme tout d'abord un composé comprenant l'ensemble des éléments constitutifs à l'exception du substituant du lanthane comme cela a été décrit plus haut. Puis, dans une deuxième partie, on mélange le composé ainsi formé et calciné avec un composé sous forme oxyde et calciné et comprenant à la fois l'alcalino-terreux et l'élément M. Ce composé sous forme oxyde peut être par exemple Sr₂Ga₂0₅. Le mélange est ensuite atomisé puis calciné.

Des détails supplémentaires vont maintenant être donnés concernant les étapes communes aux différentes variantes de procédé qui viennent d'être décrites.

Les milieux liquides mentionnés plus haut sont généralement des milieux aqueux.

Les sels des différents éléments peuvent être des sels inorganiques ou organiques. On utilise de préférence des sels solubles ou partiellement solubles dans l'eau. On peut citer à titre d'exemple les nitrates ou les chlorures. Les quantités utilisées de sels sont déterminées pour répondre aux proportions stoechiométriques requises pour l'obtention du composé final désiré.

La base est de préférence utilisée sous forme d'une solution liquide. On peut utiliser tout particulièrement une solution d'ammoniaque ou d'hydrogéno-carbonate d'ammonium. On peut effectuer la réaction précitée base-sels, ou former le mélange précité des sels avec la base soit en introduisant les sels, sous forme d'une première solution, dans une seconde solution comprenant la base, soit inversement, soit encore en introduisant les sels et la base conjointement sur un pied de cuve d'eau par exemple. En outre, on peut effectuer le mélange ou conduire la réaction en maintenant constant le pH du milieu réactionnel. Ce maintien du pH à une valeur constante peut être obtenu en ajoutant en même temps que les sels une quantité suffisante de base dans le mélange ou le milieu réactionnel.

Le mélange ou la réaction précitée se fait à une température qui peut aller de l'ambiante jusqu'à la température d'ébullition du milieu réactionnel. Il peut être avantageux de travailler à une température située entre 40 et 60°C.

Lorsque l'on effectue le mélange ou que l'on conduit la réaction à pH constant, la valeur de pH peut avantageusement être fixée entre 7 et 12, de préférence entre 9 et 11.

Une fois la réaction ou le mélange réalisé, il peut être avantageux aussi d'effectuer un mûrissement du milieu réactionnel en particulier en maintenant des conditions de température et de pH identiques à celles dans lesquelles se sont déroulées la réaction ou le mélange. Ce mûrissement peut durer de 30 minutes à 5 heures par exemple.

Dans le cas de la première variante qui ne comprend pas d'étape d'atomisation, le précipité séparé peut être lavé à l'eau ou éventuellement par une solution basique, une solution d'ammoniaque par exemple, puis séché.

La calcination est conduite à une température et sur une durée suffisantes pour obtenir la phase recherchée. En conséquence, en fonction du composé recherché, cette température peut se situer entre 700 et 1600°C. La durée de calcination est habituellement comprise entre 2 et 6 heures. La calcination peut éventuellemnt se faire en plusieurs étapes à des températures différentes. En outre, une partie de la calcination peut être faite sous atmosphère réductrice pour favoriser la formation d'une poudre susceptible de donner une phase pure après frittage.

On notera que dans la quatrième variante, la première calcination s'effectue à la température nécessaire pour préformer la phase du type La₁₋ₓ(M,M')O_{3-y}, y<3, M' désignant le substituant éventuel de M, autre que le strontium, le calcium et le baryum, c'est à dire généralement une température comprise entre 400 et 900°C.

Enfin, dans le cadre de la quatrième variante, il est possible d'effectuer la calcination selon le mode de réalisation qui vient d'être décrit (calcination entre 600 et 1200°C puis entre 1400 et 1600°C) et de compléter cette calcination par une dernière calcination sous atmosphère réductrice, notamment sous une atmosphère constituée d'un mélange d'hydrogène et d'un gaz inerte comme l'argon et à une température qui peut être comprise entre 1000 et 1200°C.

Les différentes variantes de procédé qui viennent d'être décrites conduisent au produit précurseur de l'invention, c'est à dire au produit sous forme d'une poudre. Si nécessaire, la poudre ainsi obtenue peut être broyée. On peut effectuer ainsi un broyage en milieu humide ou par ultrasons. Il est avantageux d'obtenir des poudres dont la taille moyenne est de l'ordre du micron.

Le frittage du composé précurseur de l'invention, tel que décrit plus haut ou tel qu'obtenu par le procédé précédemment étudié, se fait d'une manière connue en soi. Le composé précurseur est tout d'abord mis en forme. Cette mise en forme peut se faire par pressage, par exemple par pressage uniaxial, par calandrage ou par coulage en bande (tape casting). Pour la mise en forme, on peut utiliser un liant de type connu comme notamment l'alcool polyvinylique, les résines (type "Carbowax" par exemple), des stéarates métalliques tels que les stéarates d'aluminium et de zinc, des sucres, des amidons, des alginates et du polyméthylphénylène. La pièce ainsi formée est ensuite frittée, sans pression à une température suffisante pour obtenir la densité souhaitée. Habituellement, cette température est comprise entre environ 1500°C et environ 1550°C. Généralement, le frittage se fait à l'air. La durée peut varier entre 2 et 30 heures selon la densité que l'on souhaite obtenir. Les composés précurseurs de l'invention présentent une très bonne aptitude au frittage. Ils peuvent par exemple donner des produits frittés à 93% au bout de 2 heures de frittage à 1500°C.

Compte tenu de ses propriétés, le produit fritté de l'invention peut être avantageusement utilisé dans toute application nécessitant un matériau sous forme oxyde, qui soit un électrolyte solide et conducteur d'oxygène. Ainsi, il peut être incorporé dans des sondes à oxygène par exemple des sondes λ pour la régulation des gaz d'échappement, dans les piles à combustible à oxydes solides, dans les réacteurs chimiques à membrane, par exemple les réacteurs pour l'oxydation ménagée des hydrocarbures, ou encore dans les membranes de séparation d'oxygène. L'invention concerne donc les dispositif du type précité comprenant un composé fritté selon l'invention.

Des exemples vont maintenant être donnés.

### EXEMPLE 1

Cet exemple concerne la synthèse du composé La_{0,9}Sr_{0,1}Ga_{0,8}Mg_{0,2}O_{2,85}
Les sels utilisés sont les suivants :
Sr(NO₃)₂
Mg(NO₃)₂,6H₂0
La(NO₃)₃,6H₂0
Ga(NO₃)₃,6H₂0

On prépare 0,15 mole du composé La_{0,9}Ga_{0,8}Mg_{0,2}O_{2,75} en introduisant une solution contenant les nitrates de lanthane, gallium et magnésium (solution 0,75N) dans les quantités nécessaires, dans une solution d'ammoniaque agitée et maintenue à 50°C. Pendant l'introduction de la solution de sels, le pH est maintenu constant à une valeur de 9 par addition simultanée d'une solution d'ammoniaque 11N. On laisse ensuite mûrir le mélange obtenu pendant 1 heure à la même température et au même pH.

Le mélange obtenu (précipité-eaux-mères) est atomisé avec un atomiseur Büchi® . La température du solide à l'entrée est de 150°C, la température à la sortie est de 110°C. On obtient ainsi une poudre d'hydroxydes séchés.

On calcine cette poudre à 400°C sous air pendant 2 heures (montée 300°C/h).

La poudre calcinée est remise en suspension dans l'eau puis on ajoute à cette suspension du nitrate de strontium dans les proportions stoechiométriques.

On atomise cette suspension dans les mêmes conditions que celles données plus haut puis on la calcine à 900°C sous air 2 heures (montée 300°C/h). La poudre présente une granulométrie (telle que définie et mesurée plus haut) de 9µm.

On forme des pastilles de 1cm² par pressage uniaxal de 0,8g de poudre sous 2 tonnes/cm². Les pastilles sont frittées sans pression sous air à 1500°C pendant 2 heures, 6 heures et 30 heures respectivement. Les densités obtenues sont respectivement de 93%, 94% et 97%.

On obtient le produit de formule La_{0,9}Sr_{0,1}Ga_{0,8}Mg_{0,2}O_{2,85}. L'analyse du spectre RX de ce produit montre qu'il se présente sous la forme d'une phase pure dans un système quadratique de paramètres de maille a=5,533Å et c=7,827Å. La spectroscopie d'impédance complexe indique l'absence de phase secondaire électriquement active aux joints de grains. La conductivité mesurée à 600°C est de 0,029S.cm⁻¹ et de 0,08S.cm⁻¹ à 800°C.

En partant de la poudre de granulométrie de 9µm obtenue plus haut on procède à un broyage humide avec des billes de zircone pour obtenir une granulométrie de 1,3µm. On procède ensuite à la mise en forme et au frittage comme décrits plus haut. Après frittage à 1500°C, 2 heures, le produit présente une densité de 98%.

### EXEMPLE 2

Cet exemple concerne la synthèse du composé La_{0,95}Na_{0,05}Ga_{0,8}Mg_{0,2}0_{2,85}.

### Matières premières utilisées

La(NO₃)₃ en solution C = 2,8 M/L à 99,99% d = 1,70
Ga (NO₃)₃ en solution C = 1,807 M/L, d = 1,362
Mg (NO₃)₂ cristallisé PM = 256,41 à 97%
NaNO₃ cristallisé PM = 84,99 à 99,5%
NH₄OH solution PM = 17,03 à 22%

### Préparation :

La préparation comporte les étapes suivantes :
A) Synthèse par coprécipitation ammoniacale de La_{0,95}Ga_{0,8}Mg_{0,2}Oₓ en introduisant une solution contenant les nitrates 0,75 M/L (200 ml) dans un pied de cuve (500 ml à pH 9), à un débit de 3,3 ml/mn; régulation à pH 9 avec NH₄OH à 22%, puis mûrissement 1 h à 50°C.
B) Atomisation de l'ensemble eaux-mères + précipité (température entrée : 240°C, température sortie : 110°C).
C) Calcination à 400°C ( 2 heures montée à 5°/mn).
D) Atomisation de La_{0,95}Ga_{0,8}Mg_{0,2}Oₓ avec la quantité nécessaire de NaNO₃ (température entrée : 240°C, température sortie : 110°C).
E) Calcination : 2 heures à 900°C (montée à 5°/mn).
F) Broyage humide, de manière à obtenir une granulométrie entre 1 et 2 µm.

Après mise en forme et frittage dans les mêmes conditions que celles données pour l'exemple 1, on obtient un produit présentant les caractéristiques suivantes de densité (d) et de conductivité (σ) à 600°C et 800°C :
- d = 98,7% (1500°C / 6 h)
- a 600 = 0,007 S/cm (AC)
- σ 800 = 0,047 S/cm (DC)

L'analyse du spectre RX du produit montre qu'il se présente sous la forme d'une phase pure dans un système orthorhombique de paramètres de maille a=5,488Å, b=5,536Å et c=7,804Å. La spectroscopie d'impédance complexe indique l'absence de phase secondaire électriquement active aux joints de grains.

### EXEMPLE 3

Cet exemple concerne la synthèse du composé La_{0,95}K_{0,05}Ga_{0,8}Mg_{0,2}0_{2,85}.

### Matières premières

La(NO₃)₃ en solution c = 2,8 M/L à 99,99% d = 1,70
Ga (NO₃)₃ en solution c = 1,807 M/L, d = 1,362
Mg (NO₃)₂ cristallisé PM = 256,41 à 97%
KNO₃ cristallisé PM = 101,1 à 99,5%
NH₄OH solution PM = 17,03 à 22%

### Préparation ;

La préparation comporte les mêmes étapes que dans l'exemple 2 sauf qu'à l'étape D, on ajoute du KNO₃ à la place de NaNO₃.

On obtient un produit présentant les caractéristiques suivantes :
- d = 99,8% (1500°C / 6 h)
- σ 600 = 0,008 S/cm (AC)
- σ 800 = 0,074 S/cm (DC)

L'analyse du spectre RX du produit montre qu'il se présente sous la forme d'une phase pure dans un système orthorhombique de paramètres de maille a=5,510Å, b=5,536Å et c=7,808Å. La spectroscopie d'impédance complexe indique l'absence de phase secondaire électriquement active aux joints de grains.

### EXEMPLE 4

Cet exemple concerne la préparation d'un produit répondant à la formule globale La_{0,9}Sr_{0,1}Ga_{0,}8Mg_{0,2}O_{2,85} à partir des deux composés LaGa_{0,77}Mg_{0,23}O₃ et Sr₂Ga₂O₅ utilisés dans les proportions stoechiométrique nécessaires.

### Matières premières

La(NO₃)₃ en solution à 2,762 M/L d = 1,6816, à 99,99%
Ga (NO₃)₃ en solution à 1,807 M/L d = 1,365
Mg (NO₃)₂ cristallisé PM = 256,41 à 98%
Sr(NO₃)₂ cristallisé solution PM = 211,63 à 99%

### Préparation :

On prépare séparément les deux phases par coséchage de l'ensemble des éléments adéquats.
A) LaGa_{0,77}Mg_{0,23}O₃ obtenu par coséchage des matières premières par atomisation (température entrée : 220°C; température sortie : 140°C; avec débit 5 ml/mn).
B) Composé de formule générale Sr₂Ga₂O₅ obtenu par coséchage des matières premières par atomisation avec des températures identiques à celles données dans A).
C) Calcination des deux précurseurs à 400°C (2 heures, montée à 5°/mn).
D) Broyage du mélange des deux précurseurs en quantité nécessaire pour former le produit.
E) Atomisation de l'ensemble (température entrée : 220°C, température sortie : 120°C, débit : 8 ml/mn).
F) Calcination : 2 heures à 900°C, 5°/mn.

On obtient un produit présentant les caractéristiques suivantes :
- d = 94% (1500°C/6h)
- σ 600 = 0,019 S/cm (AC)
- σ 800 = 0,13 S/cm (DC)

L'analyse du spectre RX de ce produit montre qu'il se présente sous la forme d'une phase pure dans un système quadratique de paramètres de maille a=5,537Å et c=7,832Å. La spectroscopie d'impédance complexe indique l'absence de phase secondaire électriquement active aux joints de grains.

### EXEMPLE 5

Cet exemple concerne la préparation du produit répondant à la formule La_{0,8}Sr_{0,2}Ga_{0,8}Mg_{0,2}O_{2,85}.

### Matières premières

La(NO₃)₃ en solution à 2,762 M/L d = 1,6816, à 99,99%
Ga (NO₃)₃ en solution à 1,807 M/L d = 1,365
Sr(NO₃)₂ cristallisé PM = 211,63 à 99%
Mg (NO₃)₂ cristallisé PM = 256,41 à 98%

### Préparation :

On dissout les sels de Mg et Sr dans le mélange des sels de La et Ga, sous agitation.

On atomise la solution ainsi obtenue (température entrée : 220°C, température sortie : 140°C) avec un débit de 5 ml/mn.

On calcine 2 heures à 400°C (montée 5%mn), puis 2 heures à 900°C,(montée 5°/mn).

On effectue un broyage en milieu humide pour obtenir une granulométrie comprise entre 1 et 2 µm.

On obtient un produit présentant les caractéristiques suivantes :
- d = 93% (1500°C/6 h)
- σ 600 = 0,015 S/cm (AC)
- σ 800 = 0,096 S/cm (DC)

L'analyse du spectre RX de ce produit montre qu'il -se présente sous la forme d'une phase pure dans un système cubique de paramètres de maille a=3,914Å. La spectroscopie d'impédance complexe indique l'absence de phase secondaire électriquement active aux joints de grains.

## Revendications

1. Composé du type LaMO₃, M étant l'aluminium, le gallium ou l'indium et dans lequel le lanthane est partiellement substitué par un alcalin, un alcalino-terreux ou une terre rare et l'élément M est partiellement substitué par un alcalino-terreux ou le zinc, **caractérisé en ce qu'**il se présente sous forme d'une poudre susceptible d'atteindre par frittage sans pression une densité au moins égale à 93% de la densité théorique et de donner à l'issue d'un frittage un produit substantiellement exempt de phase secondaire électriquement active aux joints de grains.

2. Composé selon la revendication 1, **caractérisé en ce que** M est le gallium.

3. Composé selon la revendication 1 ou 2, **caractérisé en ce qu'**il se présente sous forme d'une poudre susceptible d'atteindre par frittage sans pression une densité au moins égale à 95% de la densité théorique.

4. Composé selon l'une des revendications précédentes, **caractérisé en ce que** le lanthane est substitué par le strontium et l'élément M est le gallium partiellement substitué par le magnésium.

5. Composé fritté du type LaMO₃, M étant l'aluminium, le gallium ou l'indium et dans lequel le lanthane est partiellement substitué par un alcalin, un alcalino-terreux ou une terre rare et l'élément M est partiellement substitué par un alcalino-terreux ou le zinc, **caractérisé en ce qu'**il est substantiellement exempt de phase secondaire électriquement active aux joints de grains et en ce qu'il a été obtenu par frittage sans pression.

6. Composé fritté selon la revendication 5, **caractérisé en ce que** M est le gallium.

7. Composé fritté selon la revendication 5 ou 6, **caractérisé en ce qu'**il présente une densité au moins égale à 93% de la densité théorique, plus particulièrement au moins égale à 95%.

8. Composé fritté selon l'une des revendications 5 à 7, **caractérisé en ce que** le lanthane est substitué par le strontium et l'élément M est le gallium partiellement substitué par le magnésium.

9. Composé fritté selon la revendication 8, **caractérisé en ce qu'**il présente une conductivité ionique d'au moins 0,018S.cm⁻¹ à 600°C, plus particulièrement d'au moins 0,020S.cm⁻¹.

10. Composé fritté selon l'une des revendications 8 ou 9 et de formule La_{0,9}Sr_{0,1}Ga_{0,8}Mg_{0,2}O_{2,85}, **caractérisé en ce qu'**il se présente sous forme d'un système perovskite quadratique.

11. Procédé de préparation d'un composé selon l'une des revendications 1 à 4, **caractérisé en ce qu'**on fait réagir des sels de lanthane, de l'élément M et des sels des substituants de l'élément M et du lanthane, avec une base, ce par quoi on obtient un précipité, on sépare le précipité du milieu réactionnel et on calcine le précipité.

12. Procédé de préparation d'un composé selon l'une des revendications 1 à 4, **caractérisé en ce qu'**on forme un mélange en milieu liquide de sels de lanthane et de l'élément M et de sels des substituants de l'élément M et du lanthane; on sèche par atomisation ledit mélange et on calcine le produit obtenu.

13. Procédé de préparation d'un composé selon l'une des revendications 1 à 4, **caractérisé en ce qu'**on forme un mélange en milieu liquide d'une base, d'une part et, d'autre part, de sels de lanthane et de l'élément M et de sels des substituants de l'élément M et du lanthane; on atomise le mélange obtenu et on calcine le produit issu de l'atomisation.

14. Procédé de préparation d'un composé selon l'une des revendications 1 à 4 dans lequel le lanthane est partiellement substitué par un alcalino-terreux choisi parmi le strontium, le calcium et le baryum, **caractérisé en ce qu'**il comporte les étapes suivantes
- (a) on fait réagir avec une base des sels de lanthane et de l'élément M et, éventuellement, des sels des substituants de cet élément si ces substituants sont autres que le strontium, le calcium et le baryum;
- (b) on sépare le précipité ainsi obtenu du milieu réactionnel;
- (c) on effectue une première calcination du précipité;
- (d) on forme un mélange en milieu liquide du produit issu de l'étape précédente et d'un sel de l'alcalino-terreux substituant du lanthane;
- (e) on atomise le mélange obtenu;
- (f) on effectue une seconde calcination du produit issu de l'étape précédente.

15. Procédé de préparation d'un composé selon l'une des revendications 1 à 4 dans lequel le lanthane est partiellement substitué par un alcalino-terreux choisi parmi le strontium, le calcium et le baryum, **caractérisé en ce qu'**il comporte les étapes suivantes
- (a') on forme un mélange en milieu liquide de sels de lanthane et de l'élément M et, éventuellement, d'une base, le milieu liquide pouvant encore comprendre éventuellement des sels des substituants de l'élément M si ces substituants sont autres que le strontium, le calcium et le baryum;
- (b') on atomise le mélange obtenu à l'étape précédente;
- (c') on effectue une première calcination du produit issu de l'atomisation;
- (d') on forme un mélange en milieu liquide du produit issu de l'étape précédente et d'un sel de l'alcalino-terreux substituant du lanthane;
- (e') on atomise le mélange obtenu;
- (f') on effectue une seconde calcination du produit issu de l'étape précédente.

16. Procédé selon la revendication 14 ou 15, **caractérisé en ce qu'**on mélange le produit obtenu à l'étape (c) précitée ou à l'étape (c') précitée avec un composé sous forme oxyde et calciné et comprenant à la fois l'alcalino-terreux et l'élément M, puis on atomise et calcine le mélange ainsi obtenu.

17. Procédé selon l'une des revendications 11 et 13 à 16, **caractérisé en ce qu'**on effectue la réaction ou le mélange précité des sels avec la base en maintenant constant le pH du milieu réactionnel.

18. Procédé de préparation d'un composé fritté selon l'une des revendications 5 à 10, **caractérisé en ce qu'**on met en forme puis on fritte un composé selon l'une des revendications 1 à 4 ou un composé obtenu par le procédé selon l'une des revendications 11 à 17.

19. Dispositif incorporant un matériau sous forme oxyde, électrolyte solide, conducteur d'oxygène, du type sonde à oxygène, pile à combustible, réacteur chimique à membrane, membrane de séparation d'oxygène, **caractérisé en ce qu'**il comprend un composé fritté selon l'une des revendications 5 à 10.

## Patentansprüche

1. Zusammensetzung vom Typ LaMO₃, wobei M Aluminium, Gallium oder Indium bedeutet und worin das Lanthan teilweise substituiert ist durch ein Alkali, ein Erdalkali oder eine seltene Erde und das Element M teilweise substituiert ist durch ein Erdalkali oder Zink, **dadurch gekennzeichnet, daß** sie in Form eines Pulvers vorliegt, das imstande ist, durch Sintern ohne Druck eine Dichte von zumindest 93% der theoretischen Dichte zu erreichen und am Ende eines Sinterns ein Produkt zu ergeben, das im wesentlichen frei ist von einer elektrisch aktiven zweiten Phase an den Korngrenzen.

2. Zusammensetzung gemäß Anspruch 1, **dadurch gekennzeichnet, daß** M für Gallium steht.

3. Zusammensetzung gemäß Anspruch 1 oder 2, **dadurch gekennzeichnet, daß** sie in Form eines Pulvers vorliegt, das imstande ist, durch Sintern ohne Druck eine Dichte von zumindest 95% der theoretischen Dichte zu erreichen.

4. Zusammensetzung gemäß einem der vorhergehenden Ansprüche, **dadurch gekennzeichnet, daß** das Lanthan durch Strontium substituiert ist und das Element M für Gallium steht, das teilweise durch Magnesium substituiert ist.

5. Gesinterte Zusammensetzung vom Typ LaMO₃, wobei M für Aluminium, Gallium oder Indium steht und worin das Lanthan teilweise substituiert ist durch ein Alkali, ein Erdalkali oder eine seltende Erde und das Element M teilweise substituiert ist durch ein Erdalkali oder Zink, **dadurch gekennzeichnet, daß** sie im wesentlichen frei ist von einer elektrisch aktiven zweiten Phase an den Korngrenzen und daß sie durch Sintern ohne Druck erhalten wurde.

6. Gesinterte Zusammensetzung gemäß Anspruch 5, **dadurch gekennzeichnet, daß** M für Gallium steht.

7. Gesinterte Zusammensetzung gemäß Anspruch 5 oder 6, **dadurch gekennzeichnet, daß** sie eine Dichte von zumindest 93% der theoretischen Dichte, insbesondere zumindest 95%, besitzt.

8. Gesinterte Zusammensetzung gemäß einem der Ansprüche 5 bis 7, **dadurch gekennzeichnet, daß** das Lanthan durch Strontium substituiert ist und das Element M für Gallium steht, das teilweise durch Magnesium substituiert ist.

9. Gesinterte Zusammensetzung gemäß Anspruch 8, **dadurch gekennzeichnet, daß** sie eine Ionenleitfähigkeit von zumindest 0,018 S·cm⁻¹ bei 600°C, insbesondere von zumindest 0,020 S· cm⁻¹ besitzt.

10. Gesinterte Zusammensetzung gemäß einem der Ansprüche 8 oder 9 der Formel La_{0,9}Sr_{0,1}Ga_{0,8}Mg_{0,2}O_{2,85}, **dadurch gekennzeichnet, daß** sie in Form eines quadratischen Perowskit-Systems vorliegt.

11. Verfahren zur Herstellung einer Zusammensetzung gemäß einem der Ansprüche 1 bis 4, **dadurch gekennzeichnet, daß** man Salze des Lanthan, des Elements M und Salze der Substiuenten des Elements M und des Lanthans mit einer Base umsetzt, demzufolge man einen Niederschlag erhält, man den Niederschlag vom Reaktionsmilieu abtrennt und den Niederschlag kalziniert.

12. Verfahren zur Herstellung einer Zusammensetzung gemäß einem der Ansprüche 1 bis 4, **dadurch gekennzeichnet, daß** man in flüssigem Milieu ein Gemisch der Salze von Lanthan und dem Element M und Salze der Substiuenten des Elements M und des Lanthans bildet, man durch Atomisierung besagtes Gemisch trocknet und das erhaltene Produkt kalziniert.

13. Verfahren zur Herstellung einer Zusammensetzung gemäß einem der Ansprüche 1 bis 4, **dadurch gekennzeichnet, daß** man in flüssigem Milieu ein Gemisch einer Base einesteils und anderenteils der Salze von Lanthan und von dem Element M und der Salze der Substituenten von dem Element M und dem Lanthan bildet, man das erhaltene Gemisch atomisiert und das aus der Atomisierung hervorgegangene Produkt kalziniert.

14. Verfahren zur Herstellung einer Zusammensetzung gemäß einem der Ansprüche 1 bis 4 worin das Lanthan teilweise durch ein Erdalkali, ausgewählt unter Strontium, Calcium und Barium substituiert ist, **dadurch gekennzeichnet, daß** es die folgenden Stufen beinhaltet:
- (a) man setzt mit einer Base die Salze von Lanthan und von dem Element M und gegebenenfalls die Salze der Substituenten dieses Elements, wenn diese Substituenten von Strontium, Calcium und Barium verschieden sind, um;
- (b) man trennt den so erhaltenen Niederschlag vom Reaktionsmilieu ab;
- (c) man führt eine erste Kalzinierung des Niederschlags durch;
- (d) man bildet in flüssigem Milieu ein Gemisch des Produkts der vorangegangenen Stufe und eines Salzes von dem Erdalkalisubstituenten des Lanthans;
- (e) man atomisiert das erhaltene Gemisch;
- (f) man führt eine zweite Kalzinierung des aus der vorhergehenden Stufe stammenden Produkts durch.

15. Verfahren zur Herstellung einer Zusammensetzung gemäß einem der Ansprüche 1 bis 4, worin das Lanthan teilweise substituiert ist durch ein Erdalkali, ausgewählt unter Strontium, Calcium und Barium, **dadurch gekennzeichnet, daß** es die folgenden Stufen beinhaltet:
- (a') man bildet in flüssigem Milieu ein Gemisch der Salze von Lanthan und dem Element M und gegebenenfalls einer Base, wobei das flüssige Milieu gegebenenfalls noch Salze der Substituenten des Elements M umfassen kann, wenn diese Substituenten von Strontium, Calcium und Barium verschieden sind;
- (b') man atomisiert das in der vorangegangenen Stufe erhaltene Gemisch;
- (c') man führt eine erste Kalzinierung des der Atomisierung entstammenden Produkts durch;
- (d') man bildet in flüssigem Milieu ein Gemisch des Produkts aus der vorangegangenen Stufe und eines Salzes des Erdalkalisubstituenten des Lanthans;
- (e') man atomisiert das erhaltene Gemisch;
- (f) man führt eine zweite Kalzinierung des Produkts aus der vorangegangenen Stufe durch.

16. Verfahren gemäß Anspruch 14 oder 15, **dadurch gekennzeichnet, daß** man das in der voranstehenden Stufe (c) oder der voranstehenden Stufe (c') erhaltene Produkt mit einer Zusammensetzung in Form des Oxids, kalziniert und gleichzeitig enthaltend das Erdalkall und das Element M, mischt, wonach man atomisiert und das so erhaltene Gemisch kalziniert.

17. Verfahren gemäß einem der Ansprüche 11 und 13 bis 16, **dadurch gekennzeichnet, daß** man die Reaktion oder das vorstehende Mischen der Salze mit der Base durchführt, indem man den pH des Reaktionsmilieus konstant hält.

18. Verfahren zur Herstellung einer gesinterten Zusammensetzung gemäß einem der Ansprüche 5 bis 10, **dadurch gekennzeichnet, daß** man eine Zusammensetzung gemäß einem der Ansprüche 1 bis 4 oder eine Zusammensetzung, erhalten durch das Verfahren gemäß einem der Ansprüche 11 bis 17, einer Formgebung unterzieht und hiernach sintert.

19. Vorrichtung, beinhaltend ein Material in Oxidform, einen festen Elektrolyten, einen Sauerstoffleiter, vom Typ einer Sauerstoffsonde, einer Brennstoffzelle, eines chemischen Reaktors mit Membran, einer Membran zur Sauerstoffabscheidung, **dadurch gekennzeichnet, daß** sie eine gesinterte Zusammensetzung gemäß einem der Ansprüche 5 bis 10 umfaßt.

## Claims

1. A LaMO₃ type compound, M being aluminium, gallium or indium and in which the lanthanum is partially substituted by an alkali, an alkaline-earth or a rare earth and the element M is partially substituted by an alkaline-earth or zinc, **characterized in that** it is in the form of a powder that can be sintered without pressure to a density of at least 93% of the theoretical density and that the sintered product is substantially free of a secondary phase that is electrically active at the grain boundaries.

2. A compound according to claim 1, **characterized in that** M is gallium.

3. A compound according to claim 1 or claim 2, **characterized in that** it is in the form of a powder that can be sintered without pressure to a density of at least 95% of the theoretical density.

4. A compound according to any one of the preceding claims, **characterized in that** the lanthanum is substituted with strontium and element M is gallium partially substituted with magnesium.

5. A sintered LaMO₃ type compound, M being aluminium, gallium or indium and in which the lanthanum is partially substituted by an alkali, an alkaline-earth or a rare earth and element M is partially substituted by an alkaline-earth or zinc, **characterized in that** it is substantially free of an electrically active secondary phase at the grain boundaries and in that it has been obtained by sintering without pressure.

6. A sintered compound according to claim 5, **characterized in that** M is gallium.

7. A sintered compound according to claim 5 or claim 6, **characterized in that** its density is at least 93% of the theoretical density, more particularly at least 95%.

8. A sintered compound according to any one of claims 5 to 7, **characterized in that** the lanthanum is substituted with strontium and element M is gallium partially substituted with magnesium.

9. A sintered compound according to claim 8, **characterized in that** it has an ionic conductivity of at least 0.018 S. cm⁻¹ at 600°C, more particularly at least 0.02 S. cm⁻¹.

10. A sintered compound according to claim 8 or claim 9 and with formula La_{0.9}Sr_{0.1}Ga_{0.8}Mg_{0.2}O_{2.85}, **characterized in that** it is in the form of a quadratic perovskite system.

11. A process for preparing a compound according to any one of claims 1 to 4, **characterized in that** lanthanum salts, element M and salts of substituents for element M and lanthanum are reacted with a base to obtain a precipitate, the precipitate is separated from the reaction medium and the precipitate is calcined.

12. A process for preparing a compound according to any one of claims 1 to 4, **characterized in that** a mixture is formed in a liquid medium from lanthanum salts and element M, and salts of substituents for element M, and lanthanum; said mixture is dried by spray drying and the product obtained is calcined.

13. A process for preparing a compound according to any one of claims 1 to 4, **characterized in that** a mixture is formed in a liquid medium from a base and then lanthanum salts and salts of element M, and salts of substituents for element M and lanthanum; the mixture obtained is spray dried and the spray dried product is calcined.

14. A process for preparing a compound according to any one of claims 1 to 4, in which the lanthanum is partially substituted by an alkaline-earth selected from strontium, calcium and barium, **characterized in that** it comprises the following steps:
a) reacting lanthanum salts and salts of element M with a base, optionally with salts of substituents for said element if said substituents are other than strontium, calcium and barium;
b) separating the precipitate obtained from the reaction medium;
c) carrying out a first calcining of the precipitate;
d) forming a mixture in a liquid medium from the product from the preceding step and an alkaline-earth salt substituting for lanthanum;
e) spray drying the mixture obtained;
f) carrying out a second calcining step on the product from the preceding step.

15. A process for preparing a compound according to any one of claims 1 to 4, in which the lanthanum is partially substituted by an alkaline-earth selected from strontium, calcium and barium, **characterized in that** it comprises the following steps:
a') forming a mixture in a liquid medium from lanthanum salts and salts of element M and optionally a base, the liquid medium possibly further optionally comprising salts of substituents for element M if said substituents are other than strontium, calcium and barium;
b') spray drying the mixture obtained from the preceding step;
c') carrying out a first calcining step on the spray dried product;
d') forming a mixture in a liquid medium from the product from the preceding step and an alkaline-earth salt substituting for lanthanum;
e') spray drying the mixture obtained;
f') carrying out a second calcining step on the product from the preceding step.

16. A process according to claim 14 or claim 15, **characterized in that** the product obtained in said step c) or said step c') is mixed with a compound in the oxide form and calcined and comprising both alkaline-earths and element M, followed by spray drying and calcining the mixture obtained.

17. A process according to any one of claims 11 and 13 to 16, **characterized in that** said mixture of salts is reacted with the base by keeping the reaction medium of the pH constant.

18. A process for preparing a sintered compound according to any one of claims 5 to 10, **characterized in that** a compound according to any one of claims 1 to 4 or a compound obtained by the process according to any one of claims 11 to 17 is formed then sintered.

19. A device incorporating a material in the oxide form, a solid electrolyte, an oxygen conductor, of the oxygen sensor type, a fuel cell, a chemical membrane reactor, an oxygen separation membrane, **characterized in that** it comprises a sintered compound according to any one of claims 5 to 10.
